# EUROPEAN PATENT SPECIFICATION

(11) **EP 2 713 313 B1**
(45) Date of publication and mention of the grant of the patent: **02.12.2020**
(21) Application number: 13177090.1
(22) Date of filing: 18.07.2013
(51) Int. Cl.: G06K 9/62, G06K 9/68

(54) **Image processing system and image processing method**
Bildverarbeitungssystem und Bildverarbeitungsverfahren
Système et procédé de traitement d'images

(30) Priority: 28.09.2012 JP 2012217681
(43) Date of publication of application: 02.04.2014
(73) Proprietor: Omron Corporation, Kyoto-shi, Kyoto 600-8530 (JP)
(72) Inventor: Araki, Tsunehiko, Kyoto, Kyoto 600-8530 (JP); Nagashima, Fumihiro, Kyoto, Kyoto 600-8530 (JP)
(74) Representative: Horn Kleimann Waitzhofer Patentanwälte PartG mbB

(56) References cited:
- JP-A- 2002 279 342
- JP-A- 2011 100 245
- US-A1- 2001 055 423
- US-A1- 2007 263 930
- US-B1- 6 944 340
- US-B2- 6 401 067

## Description

### TECHNICAL FIELD

The present invention relates to an image processing system and an image processing method for acquiring character information from an input image.

### RELATED ART

In an FA (Factory Automation) field and the like, what is called an image processing system is put into practical use as a device that optically detects a defect generated in a half-finished product in a production process or a product before shipment or optically measures a size of the defect.

For example, Japanese Unexamined Patent Publication No. 2011-100245 discloses a pattern recognition device that performs pattern recognition with high accuracy by learning as an example of image processing in which the pattern recognition is used. Specifically, in the pattern recognition device, an element at an identical position of a reference feature vector obtained in each plural feature vectors included in an identical category is projected to an axis of a previously-set range in each plural categories each of which classifies a learning sample pattern, and a previously-set margin amount and the category are correlated with each other to generate a candidate table in each element on the axis. Another example is US Patent 6 944 340 B1, which discloses that the resolution of an image is changed in order to improve the confidence level of the character recognition.

Generally, in the case that the pattern recognition is performed, preferably learning processing (teaching processing) is previously performed.

### PRIOR ART DOCUMENTS

### PATENT DOCUMENTS

Patent Document 1: JP 2011-100245A

### OUTLINE OF THE INVENTION

### PROBLEMS TO BE SOLVED BY THE INVENTION

Processing of acquiring the character information from the input image by performing character recognition to the input image obtained by imaging the target is well known as one of image processing modes. In the character recognition, the character is recognized (specified) by calculating a degree of coincidence between a partial image in the input image and an image or a feature quantity of the predetermined character.

In the image processing relating to the character recognition, there is well known a technology of improving a recognition rate by previously designating a character format (documentary form control information). For example, a character class (for example, a numerical character) is previously set with respect to a character string of a recognition target, and the character recognition is performed under the character format of the character class, so that the recognition target is prevented from being falsely recognized as an alphabetic character.

Accuracy of the image processing is subjected to a parameter (a setting value) relating to the image processing. Therefore, as disclosed in Japanese Unexamined Patent Publication No. 2011-100245, frequently processing of determining the proper parameter (for example, a threshold) is performed by processing plural learning sample patterns. The function of setting the parameter is called an automatic teaching function, and generally it is necessary to perform the learning (teaching) using many OK images (the image including the target that should be correctly extracted) and NG images (the image including the target that should not be extracted).

However, it takes a long time to perform the learning (teaching) using the many images, and the parameters are hardly adjusted for the many parameters.

The present invention has been devised to solve the problems described above, and an object thereof is to provide an image processing system and an image processing method each capable of easily determining an initial value of a parameter relating to character recognition in image processing of acquiring character information from an input image by the character recognition.

### MEANS FOR SOLVING THE PROBLEM

To solve the above problems, the present invention provides an image processing system according to claim 1 and an image processing method according to claim 8. Embodiments of the invention are described in the dependent claims.
According to one aspect, there is provided an image processing system for acquiring character information from an input image. The image processing system includes: a first designation part that receives a setting of a measurement region with respect to a reference image obtained by imaging a target; a second designation part that receives a character format indicating a restricting condition of each character; a recognition part that performs character recognition to a partial image included in the measurement region in accordance with the character format; and a change part that changes a parameter of the character recognition in accordance with a result of the character recognition, the change part determines an initial value of the parameter by changing the parameter such that the result of the character recognition exceeds a predetermined probability.

Preferably the character format includes a character class or a specific character, the character format being designated in each character.

Preferably the first designation part displays the reference image, and determines the measurement region in response to a user's operation performed to the displayed reference image.

Preferably the second designation part displays the set character format and a plurality of objects correlated with a plurality of character classes, and adds the character class to the character format by selecting the object correlated with the character class.

Preferably the change part receives an instruction to change the initial value of the parameter of the character recognition from an external device other than the vision sensor.

Further preferably the recognition part performs the character recognition to the partial image again in accordance with the parameter relating to the changed character recognition.

Preferably the image processing system further includes an acquisition part that acquires the input image, wherein the recognition part performs the recognition processing to the acquired input image and specifies a region having a relatively high degree of coincidence under the character format.

In accordance with another aspect, there is provided an image processing method for acquiring character information from an input image. The method includes the steps of: receiving a setting of a measurement region with respect to a reference image obtained by imaging a target; receiving a character format indicating a restricting condition of each character; performing character recognition to a partial image included in the measurement region in accordance with the character format; and changing a parameter of the character recognition in accordance with a result of the character recognition. An initial value of the parameter of the character recognition is determined by changing the parameter such that the result of the character recognition exceeds a predetermined probability in the changing step.

### EFFECT OF THE INVENTION

According to the present invention, the initial value of the parameter relating to the character recognition can easily be determined in the image processing of acquiring the character information from the input image by the character recognition.

### BRIEF DESCRIPTION OF THE DRAWINGS

Fig. 1 is an external view illustrating an entire configuration of an image processing system according to an embodiment;
Fig. 2 is a schematic diagram illustrating a functional configuration of the image processing system of the embodiment;
Fig. 3 is a schematic diagram illustrating a processing content of character recognition in the image processing system of the embodiment;
Fig. 4 is a flowchart illustrating a processing procedure of an image and performing a character recognition on the input image using the adjusted measurement parameter and the character format.

### EFFECT OF THE INVENTION

According to the present invention, the initial value of the parameter relating to the character recognition can easily be determined in the image processing of acquiring the character information from the input image by the character recognition.

### BRIEF DESCRIPTION OF THE DRAWINGS

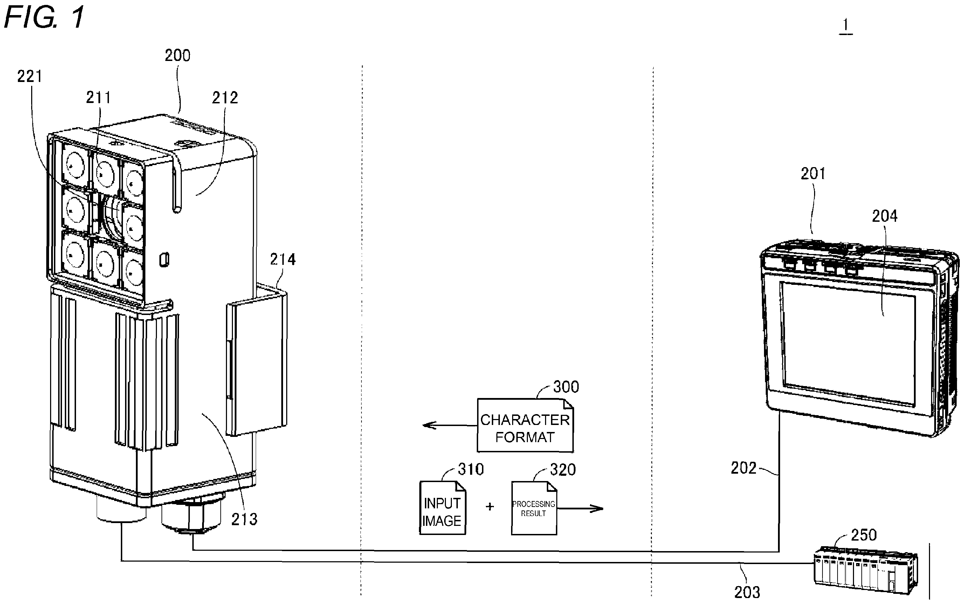

Fig. 1 is an external view illustrating an entire configuration of an image processing system according to an embodiment;

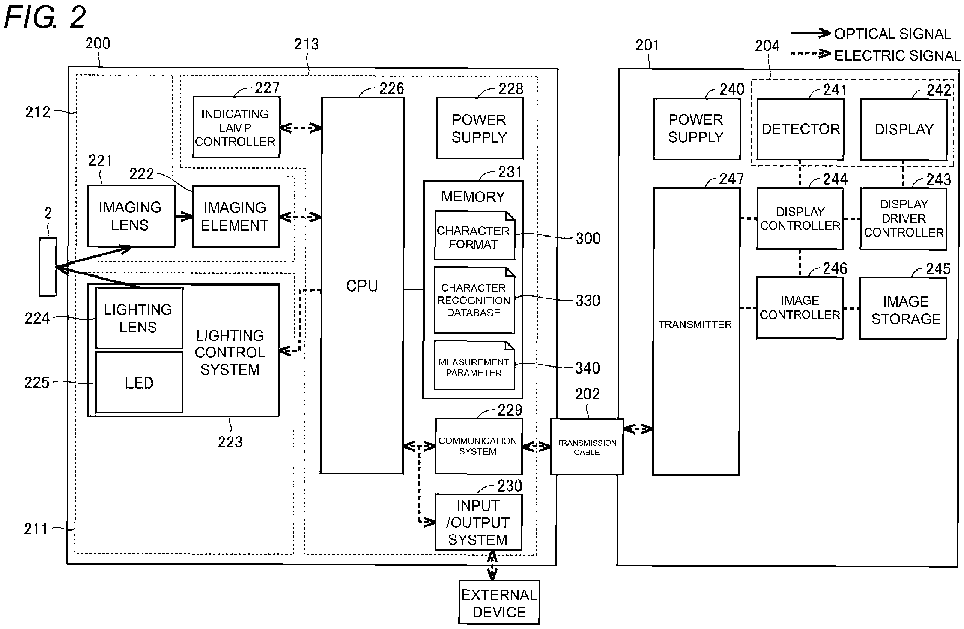

Fig. 2 is a schematic diagram illustrating a functional configuration of the image processing system of the embodiment;

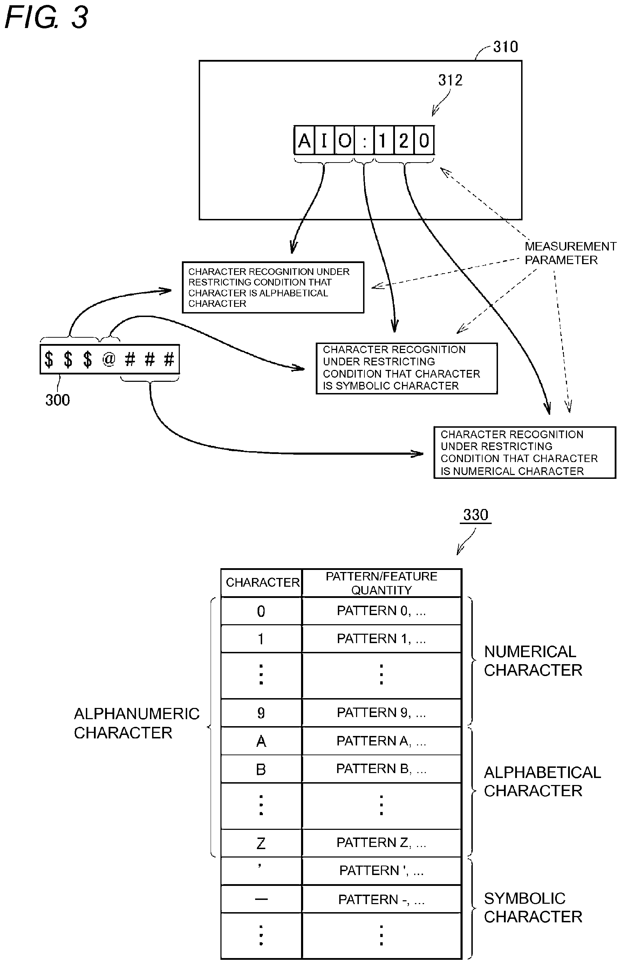

Fig. 3 is a schematic diagram illustrating a processing content of character recognition in the image processing system of the embodiment;

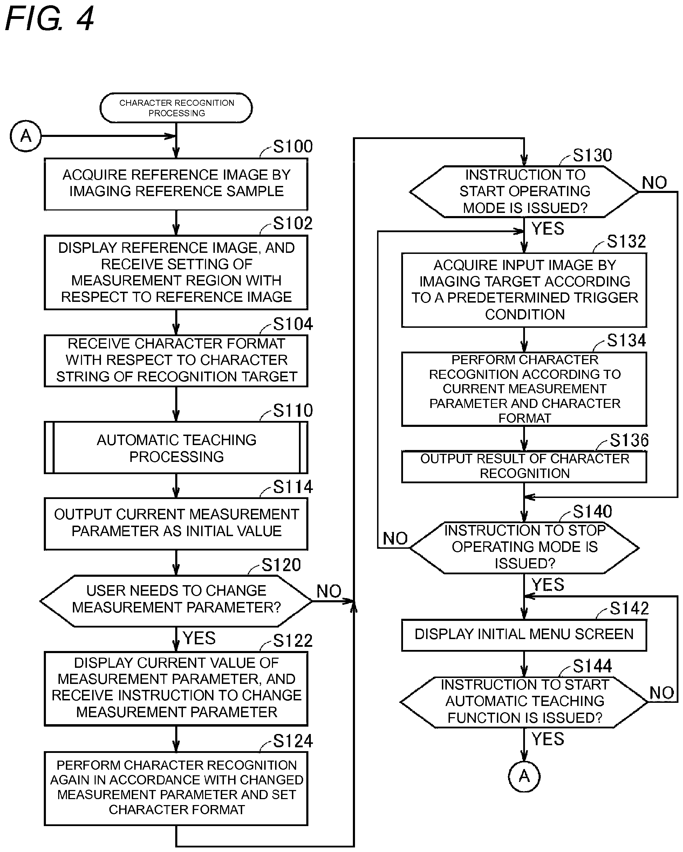

Fig. 4 is a flowchart illustrating a processing procedure of an image processing method for acquiring character information from an input image in the image processing system of the embodiment;

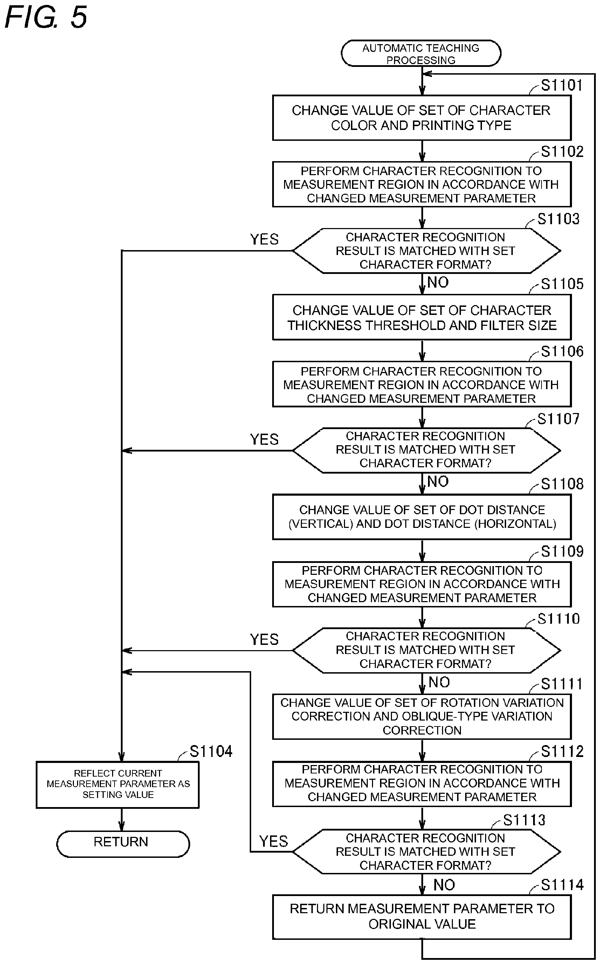

Fig. 5 is a flowchart illustrating a processing procedure of an automatic teaching sub-routine in Step S110 of Fig. 4;

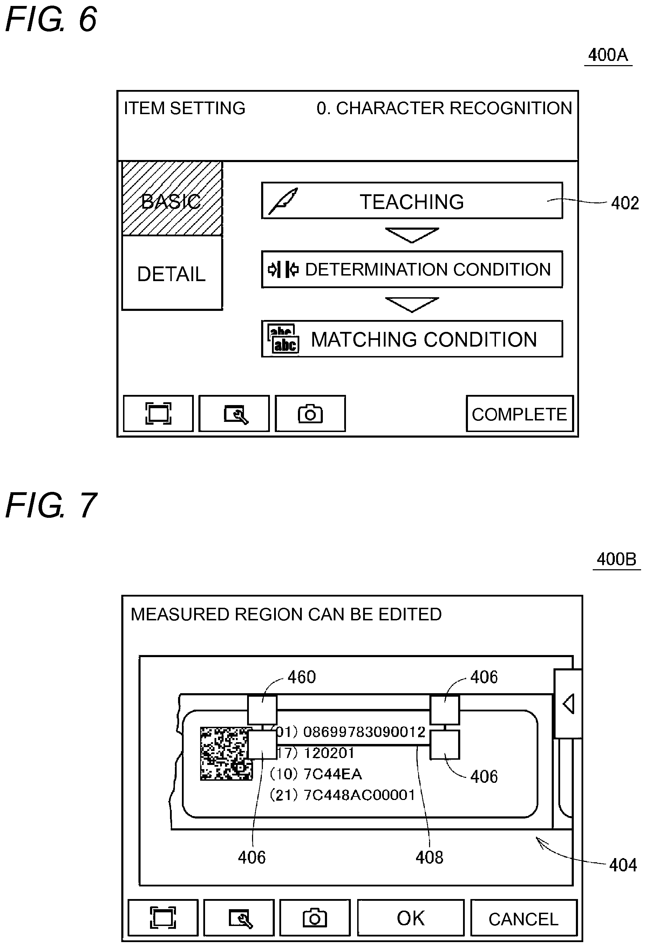

Fig. 6 is a view illustrating an example of a user interface screen, which is provided by the image processing system of the embodiment and illustrates an initial menu of character recognition processing;
Fig. 7 is a view illustrating an example of a user interface screen, which is provided by the image processing system of the embodiment and used to set a measurement region in the character recognition processing;

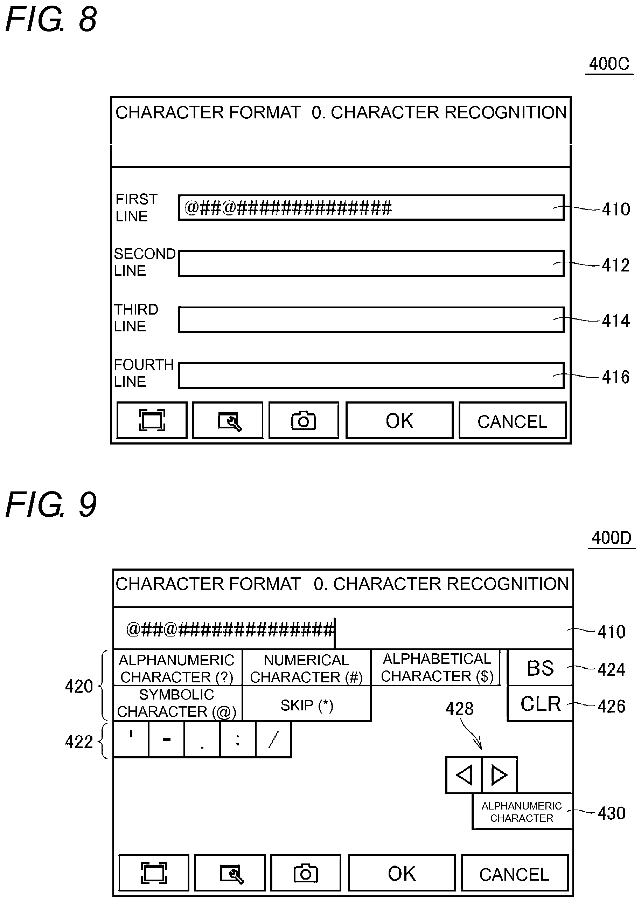

Fig. 8 is a view illustrating an example of a user interface screen, which is provided by the image processing system of the embodiment and used to set a character format in the character recognition processing;
Fig. 9 is a view illustrating a modification example of a user interface screen, which is provided by the image processing system of the embodiment and used to set the character format;

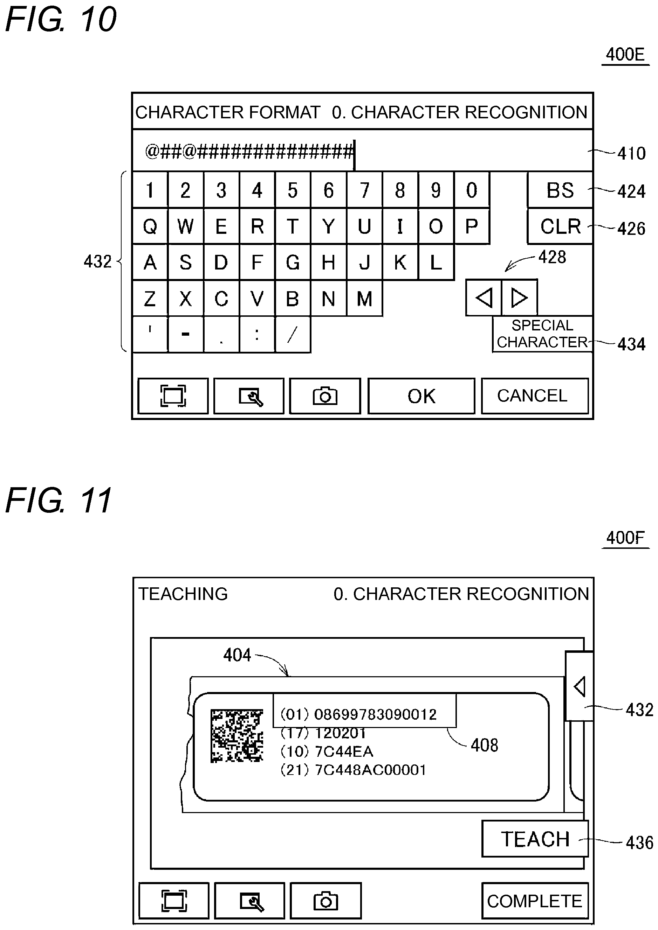

Fig. 10 is a view illustrating a modification example of a user interface screen, which is provided by the image processing system of the embodiment and used to set the character format;
Fig. 11 is a view illustrating an example of a user interface screen, which is provided by the image processing system of the embodiment and relates to an automatic teaching function in the character recognition processing;

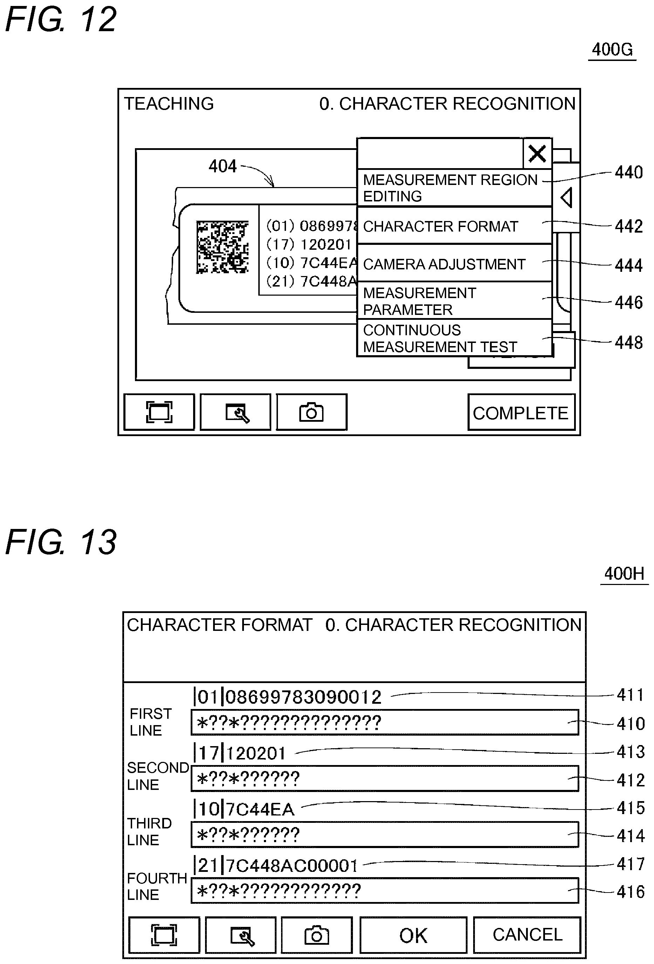

Fig. 12 is a view illustrating an example of a user interface screen, which is provided by the image processing system of the embodiment and relates to a manual adjustment in the character recognition processing;
Fig. 13 is a view illustrating an example of a user interface screen, which is provided by the image processing system of the embodiment and relates to a character format adjustment in the character recognition processing;

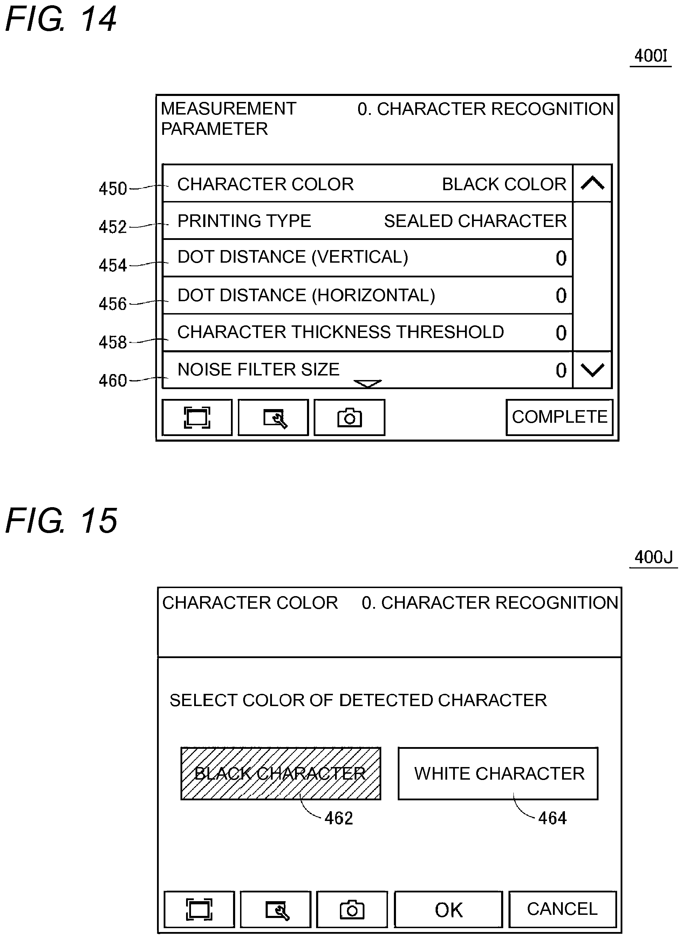

Fig. 14 is a view illustrating an example of a user interface screen, which is provided by the image processing system of the embodiment and relates to a measurement parameter adjustment in the character recognition processing;
Fig. 15 is a view illustrating an example of a user interface screen, which is provided by the image processing system of the embodiment and relates to a character color adjustment of a measurement parameter in the character recognition processing;

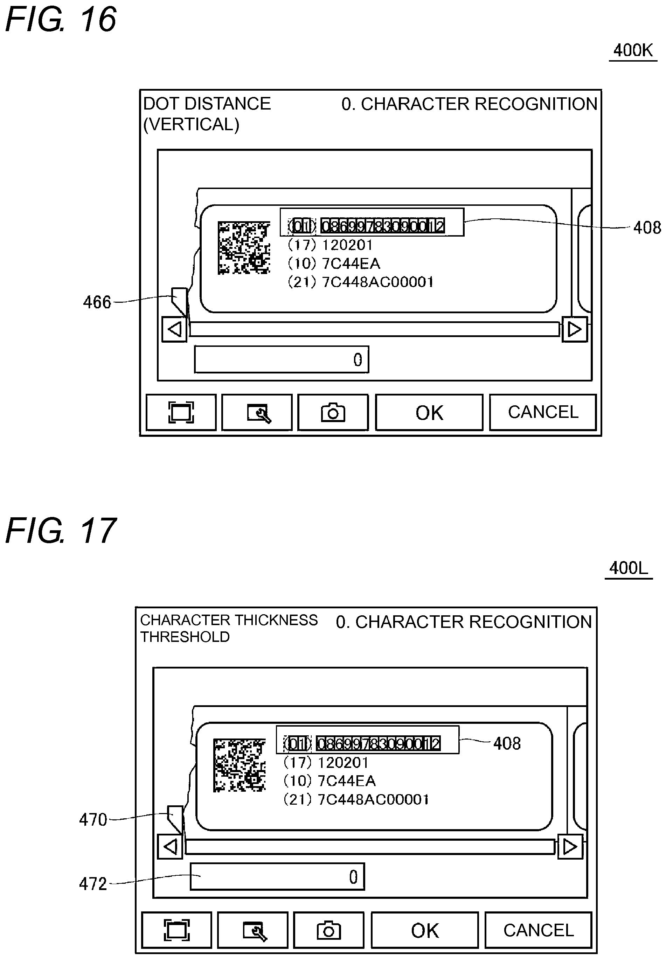

Fig. 16 is a view illustrating an example of a user interface screen, which is provided by the image processing system of the embodiment and relates to a dot distance (vertical) adjustment of the measurement parameter;
Fig. 17 is a view illustrating an example of a user interface screen, which is provided by the image processing system of the embodiment and relates to a character thickness threshold adjustment of the measurement parameter; and

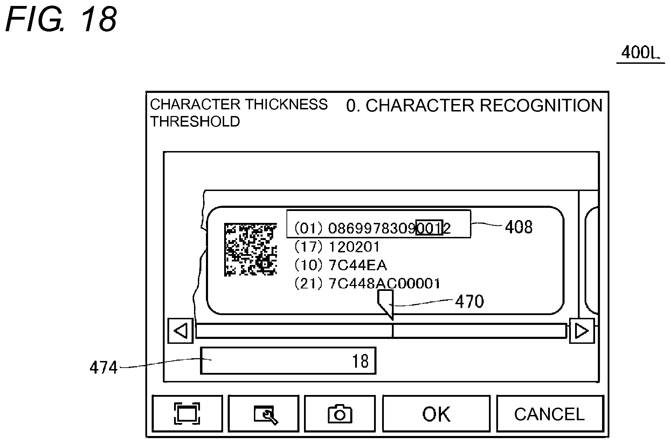

Fig. 18 is a view illustrating an example of a user interface screen, which is provided by the image processing system of the embodiment and relates to the character thickness threshold adjustment of the measurement parameter.

### EMBODIMENTS OF THE INVENTION

Hereinafter, an embodiment of the present invention will be described in detail with reference to the drawings. In the drawings, the identical or equivalent component is designated by the identical numeral, and the overlapping description is omitted.

### (A. Device configuration of image processing system)

A device configuration of an image processing system of the embodiment will be described. Fig. 1 is an external view illustrating an entire configuration of an image processing system 1 of the embodiment. Fig. 2 is a schematic diagram illustrating a functional configuration of the image processing system 1 of the embodiment.

Referring to Fig. 1, for example, the image processing system 1 is incorporated in a production line and the like. The image processing system 1 in Fig. 1 acquires character information from an input image. More specifically, a vision sensor 200 has a function of acquiring the character information from the input image such that character recognition is performed to the input image acquired by imaging a target (also referred to as a "workpiece 2"). Particularly, the vision sensor 200 performs the character recognition in accordance with a predetermined character format. Text data may be output as a result of the character recognition.

As used herein, the "character format" is a condition that further restricts a recognition candidate in performing the character recognition. Typically, the character format includes designation of a character class (such as an alphanumeric character, an alphabetic character, a numerical character, a symbolic character, a special character, a kanji, a hiragana, and a katakana), designation of a specific character (such as characters "A", "B", ... of the alphabets, characters ""', "-", ... of the symbols, characters "a", "i", ... of the hiraganas, and characters "a", "i", ... of the katakanas), designation of a font class, and designation of a character size (font size) in each character of the recognition target. A recognition rate can be improved (a false recognition rate can lowered) with respect to the workpiece (product/half-finished product) in which a printing format is predetermined by previously designating the character format.

For example, when the character format is designated in the order of the "alphabetic character", the "alphabetic character", and the "numerical character", with respect to the character region including the plural character strings in the input image, the character candidate having the highest degree of coincidence is selected as the first character from the character candidates belonging to the "alphabetic character", the character candidate having the highest degree of coincidence is selected as the second character from the character candidates belonging to the "alphabetic character", and the character candidate having the highest degree of coincidence is selected as the third character from the character candidates belonging to the "numerical character". The speed enhancement of the processing and the improvement of the recognition rate can be achieved by restricting the character format, namely, the recognition candidate of the character recognition. The detailed character format is described later.

In addition to processing of reading the character region included in the input image to output text data indicating a content of the character region, the character recognition performed by the vision sensor 200 includes processing of extracting the region having the high degree of coincidence with the specific character included in the character format and a high degree of certainty of recognition in the designated character class. That is, in the latter processing, at least one region having the high degree of coincidence with the designated character format is extracted from the input image.

More specifically, the image processing system 1 includes the vision sensor 200 and a display operation unit 201. The vision sensor 200 and the display operation unit 201 can conduct communication with each other through a transmission cable 202 in accordance with a predetermined protocol.

The display operation unit 201 receives a setting of the character format, and displays the input image imaged by the vision sensor 200 and the processing result. A user operates the display operation unit 201 to transmit information on character format processing, thereby controlling image processing and imaging processing in the vision sensor 200. Fig. 1 illustrates the one vision sensor 200 connected to the display operation unit 201 by way of example. Alternatively, plural vision sensors 200 may be connected to the display operation unit 201 through the transmission cable 202 and a hub (not illustrated).

In the image processing system 1 in Fig. 1, by way of example, a function of acquiring the input image and a function of performing the character recognition to the input image are incorporated in the vision sensor 200, and a function of designating a measurement parameter necessary to perform the character recognition and a function of displaying the character recognition result are incorporated in the display operation unit 201. However, the present invention is not limited to the image processing system 1 in Fig. 1. For example, all the functions may be incorporated in a single image processing device, or each function may be incorporated in separate devices. Alternatively, the function of imaging the target to acquire the input image target may be incorporated in the imaging device while the remaining functions are incorporated in the image processing device. Any embodiment can be included in the technical scope of the present invention when the embodiment has the configuration described in the claim of the present invention.

The vision sensor 200 is connected to a PLC (Programmable Logic Controller) 250 through an IO cable 203 while being communicable with each other. The PLC 250 receives a signal from another device or transmits a signal to the device, thereby controlling the whole of the image processing system 1.

The vision sensor 200 includes an imaging part 212 and a processor 213, and the imaging part 212 includes a lighting part 211 and an imaging lens 221. The processor 213 is provided with a built-in microcomputer. An attaching part 214 that attaches the vision sensor 200 to a support member (not illustrated) is provided in a casing of the vision sensor 200.

The display operation unit 201 includes a touch panel 204 in which a display, such as an LCD (Liquid Crystal Display) and an organic EL (Organic Electro-Luminescence), and a detector receiving an instruction by touching the display with a finger or a stylus are integrally formed.

The display operation unit 201 transmits a character format 300 set by the user to the vision sensor 200, and the vision sensor 200 transmits a processing result 320 to the display operation unit 201. The processing result 320 includes the input image acquired by imaging the target and the character recognition result obtained by performing the character recognition to the acquired input image 310.

Functional configurations of the vision sensor 200 and the display operation unit 201 will be described below with reference to Fig. 2.

The vision sensor 200 includes the lighting part 211 that lights the workpiece 2 that is of the target, the imaging part 212 that images the workpiece 2, and the processor 213. The lighting part 211 includes a lighting control system 223, and the lighting control system 223 includes a lighting lens 224 and an LED (Light Emitting Diode) 225 that is of a light source. The imaging part 212 includes the imaging lens 221 and an imaging element 222.

The processor 213 includes an indicating lamp controller 227 that controls an indicating lamp (indicator) such as a lamp (not illustrated), a CPU 226 that performs various pieces of processing of the vision sensor 200, a power supply 228 that supplies an electric power to each part, a communication system 229 that is connected to the transmission cable 202, the input/output system 230 that inputs and outputs data to and from an external device, and a memory 231 in which various pieces of data such as the input image and the processing result are stored in addition to the character format 300, a character recognition database 330, and a measurement parameter 340. The character recognition database 330 includes information (a pattern or a feature quantity) on each character to which the character recognition is performed.

The display operation unit 201 includes a power supply 240 that supplies the electric power to each part, the touch panel 204 that is constructed by a detector 241 that receives the instruction from the outside and a display 242, a display driver 243 that controls displaying by the display 242, a display controller 244 that controls the image displayed on the display 242 through the display driver 243, an image storage 245 in which the image is stored, an image controller 246 that deals with the image received from the vision sensor 200, and a transmitter 247 that transmits and receives the data to and from the vision sensor 200.

The display operation unit 201 is configured to be detachably attached to the vision sensor 200. In a typical usage pattern, the display operation unit 201 is downsized so as to be brought with the user who patrols the production line in a production site. Therefore, a size of the display 242 of the display operation unit 201 is also reduced.

The display 242 displays the image based on a control signal from the display driver 243. Based on an image signal from the display controller 244, the display driver 243 generates the control signal in order to control display processing of the display 242, and outputs the control signal to the display 242.

Based on the instruction from the user through the detector 241, screen information provided from the image controller 246, and the input image and the processing result, which are provided from the vision sensor 200 through the transmitter 247, the display controller 244 generates a user interface screen and displays the user interface screen on the display 242 through the display 242 display driver 243.

The display controller 244 transmits the character format and the measurement parameter, which are set based on the instruction from the user through the detector 241, to the vision sensor 200 through the transmitter 247.

A processor may execute a program to implement the functional configuration in Fig. 2. Alternatively, the functional configuration may be implemented with a dedicated integrated circuit, such as an ASIC (Application Specific Integrated Circuit), which includes a main processing circuit of the vision sensor 200 and/or the display operation unit 201 and a peripheral circuit thereof.

### (B. Character format)

The character format dealt with by the image processing system 1 will be described below. In the image processing system 1 of the embodiment, the character classes such as the "numerical character", the "alphabetical character", the "alphanumeric character", and the "symbolic character" can be designated as an example of the character format. The character classes can be designated in each character of the recognition target.

The "numerical character" designates the numerical characters "0", "1", ..., "9" (recognition target: "0" to "9"). It is assumed that the "numerical character" is indicated by a symbol "#" in the image processing system 1.

The "alphabetical character" designates the alphabetic characters "A", "B", ..., "Z" (recognition target: "A" to "Z"). It is assumed that the "alphabetical character" is indicated by a symbol "$" in the image processing system 1. A capital letter and a lower-case character may be distinguished from each other as the "alphabetical character". At this point, each of the capital letter and the lower-case character may be dealt with as a further segmentalized character class. For example, an "alphanumeric capital letter" and an "alphanumeric lower-case character" may be used as the character class.

The "alphanumeric character" is the character class (recognition target: all the characters except the symbolic character) including the "numerical character" and the "alphabetical character". It is assumed that the "alphanumeric character" is indicated by a symbol "?" in the image processing system 1.

The "symbolic character" designates the symbolic characters "'" (apostrophe), "-" (hyphen), "." (period), ":" (colon), and "/" (slash) (recognition target: ""', "-", ".", ":", and "/"). It is assumed that the "symbolic character" is indicated by a symbol "@" in the image processing system 1.

For example, the false recognition can be prevented between 0 (zero) and O by designating a wildcard ("#", "?", and "@").

In the image processing system 1, the specific character can be designated in addition to the character class above described. The specific character means one character selected from recognizable characters, and any one of the numerical characters "0", "1", ..., "9", the alphabetic characters "A", "B", ..., "Z", and the symbolic characters ""', "-", ".", ":", and "/" is selected. In the case that the specific character is designated, similarity degree calculation processing and stability degree determination processing are performed only between a partial image of the recognition target and the designated specific character. Whether the partial image of the recognition target is matched with the designated specific character is determined.

A character attribute excluded from the character recognition target can also be designated in addition to the designation of the character class or the specific character. It is assumed that the character excluded from the character recognition target is indicated by a symbol "*", and the symbol "*" means a skip. In the case that the skip attribute is designated, the similarity degree calculation processing and stability degree determination processing are skipped. At this point, the character excluded from the character recognition target may also be excluded from the number of detection characters. When the skip attribute is designated, the character in which the false recognition is easily generated can be excluded from the character recognition target, and the character recognition processing can more stably be performed.

### (C. Character recognition processing)

The character recognition processing in which the character format is used will be described below. Fig. 3 is a schematic diagram illustrating a processing content of the character recognition in the image processing system 1 of the embodiment.

Referring to Fig. 3, in the vision sensor 200, a character region 312 is extracted from the input image 310 obtained by imaging the target. The character region 312 is specified by performing edge extraction processing or the feature quantity extraction processing to the input image 310. A region (the partial image) of each character included in the character region 312 is extracted. Because a well-known technology can be used in the processing of extracting the region (the partial image) corresponding to the image of each character, the detailed description is omitted.

Then the vision sensor 200 performs the character recognition to the region of each character. A character recognition database 330 is previously prepared for the purpose of the character recognition. Typically, the character recognition database 330 includes identification information (the pattern or the feature quantity) specifying each character for each of them. The corresponding character class is added to each character stored in the character recognition database 330. That is, the information indicating that the character class is the "numerical character" is added to the numerical characters "0", "1", ..., "9", and the information indicating that the character class is the "alphabetic character" is added to the alphabetic characters "A", "B", ..., "Z".

Fig. 3 illustrates a typical example of the character recognition processing, and any method can be adopted as the character recognition processing in the present invention.

The vision sensor 200 specifies the character corresponding to the region (the partial image) of each character by referring to the character recognition database 330 in the character format 300. "$$$@###" is designated in the character format 300 in Fig. 3. A method for describing the character format 300 is not limited to one in Fig. 3, but any method may be adopted.

The character format in Fig. 3 indicates that the first to third characters from the left are the "alphabetical characters", that the fourth character is the "symbolic character", and that the fifth to seventh characters are the "numerical characters". The vision sensor 200 calculates the degree of coincidence with respect to each of the first to third characters included in the character region 312 while each character of the alphabetical character included in the character recognition database 330 is used as the candidate. That is, the vision sensor 200 calculates the degree of coincidence between the first character included in the character region 312 and the alphabetic characters "A", "B", ..., "Z". The vision sensor 200 (basically) outputs the alphabetic character having the highest degree of coincidence in the character candidates as the recognition result. The vision sensor 200 repeats the similar processing with respect to the characters from the second character included in the character region 312.

In the example in Fig. 3, the second character of the character region 312 is "I", and the third character of the character region 312 is "O". The use of the character format 300 can prevent "I" and "O" from being falsely recognized as "1 (one)" and "0 (zero)". Similarly, in the example in Fig. 3, the fifth character of the character region 312 is "1", and the seventh character of the character region 312 is "0". The use of the character format 300 can prevent "1 (one)" and "0 (zero)" from being falsely recognized as "I" and "O".

Because frequently a printing format is predetermined for a model number, a price, a date of manufacture, and an identification number of the product, the character format can easily be applied, and therefore the recognition rate can be improved (the false recognition rate can be lowered).

As described above, the specific character can also be designated in the character format 300. In the case that the specific character is designated, some sort of pattern matching processing is performed. In the example in Fig. 3, for example, when "$$$:###" is designated as the character format 300, the degree of coincidence between the fourth character included in the character region 312 and ":" (colon) is calculated, and the calculated degree of coincidence is output as the effective recognition result only when the degree of coincidence is larger than a predetermined value. Therefore, only the character in which the fourth character included in the character region 312 is recognized as ":" (colon) is extracted. In this case, sometimes the plural character regions 312 are extracted from the input image 310.

In the character recognition processing in Fig. 3, the processing of extracting the character region 312, the processing of extracting the region (the partial image) of each character included in the character region 312, and the matching processing performed to the image of each extracted character using the character recognition database 330 are performed in accordance with the previously-set parameter. That is, the measurement parameter is previously prepared as the parameter relating to the character recognition. An initial value of the measurement parameter is determined by the automatic teaching function that is provided by the image processing system 1 of the embodiment. The detailed automatic teaching function is described later.

### (D. Measurement parameter)

The measurement parameter referred to in the character recognition processing in Fig. 3 will be described below in detail. The following measurement parameters are used in the image processing system 1 of the embodiment.
(1) character color: a parameter designating a color of the character of the detection target
   - setting value: "black" or "white"
(2) printing type: a parameter designating an expression format of the character of the detection target
   - setting value: "seal" or "dot" ("seal" means a font such as an outline font in which an outline is continuously expressed, and "dot" means a font such as a dot matrix)
(3) dot distance (vertical): a parameter that becomes effective only in the case that (2) printing type is "dot", and the parameter indicates a vertical distance between dots constituting the character of the detection target
   - input range: 0 pixel to vertical width (pixel) of input image
(4) dot distance (horizontal): a parameter that becomes effective only in the case that (2) printing type is "dot", and the parameter indicates a horizontal distance between dots constituting the character of the detection target
   - input range: 0 pixel to horizontal width (pixel) of input image
(5) filter size: a parameter designating a size of a noise removing filter
   - input range: -60 to 440 (the noise is removed in a wider range with increasing value of the input range, and the noise is removed in a narrower range with decreasing value of the input range)
(6) character thickness threshold: a parameter designating a thickness of the character of the detection target
   - input range: -255 to 255 (the character changes so as to be thinned when a negative value is set to the input range, and the character changes so as to be thickened when a positive value is set to the input range)
(7) rotation variation correction: a rotation variation of the character in a predetermined range can be dealt with by enabling a rotation variation correction function
   - setting value: "ON" or "OFF"
(8) oblique type variation correction: an oblique type variation of the character in a predetermined range can be dealt with by enabling an oblique type variation correction function
   - setting value: "ON" or "OFF"
(9) frame deletion correction: a black portion that is in contact with the measurement region is excluded as the noise from a read candidate by enabling a frame deletion correction function
   - setting value: "ON" or "OFF"
(10) long-and-thin character threshold: a parameter designating a determination whether the character is a long and thin character (I, J, 1, :, and /) when a multiplying factor of a height to a width of a detected rectangle is greater than or equal to a value
   - input range: 1 to 10
(11) hyphen height upper limit: a parameter designating a height upper limit of a region seemed to be a hyphen
   - input range: 0 to 100
(12) hyphen height lower limit: a parameter designating a height lower limit of the region seemed to be the hyphen
   - input range: 0 to 100

### (E. Processing procedure)

A processing procedure of the image processing method for acquiring the character information from the input image in the image processing system 1 of the embodiment will be described below.

Fig. 4 is a flowchart illustrating the processing procedure of the image processing method for acquiring the character information from the input image in the image processing system 1. Fig. 5 is a flowchart illustrating a processing procedure of an automatic teaching sub-routine in Step S110 of Fig. 4. An operation mode of the image processing system 1 includes an adjustment mode in which various parameters relating to the measurement processing including the character recognition processing are adjusted and an operating mode in which the measurement processing is actually performed. In the processing procedure in Fig. 4, it is assumed that the adjustment mode is initially selected.

Referring to Fig. 4, the automatic teaching function is performed in the adjustment mode. The user disposes the target (a reference sample) including the character string of the recognition target in a visual field range of the vision sensor 200, and operates the display operation unit 201 to issue the instruction to acquire a reference image. The vision sensor 200 images the target (the reference sample) to acquire the reference image (Step S100). Then the vision sensor 200 transmits the acquired reference image to the display operation unit 201.

The display operation unit 201 displays the reference image received from the vision sensor 200, and receives a setting of the region (the measurement region) that should be the recognition target with respect to the reference image (Step S102). The user sets the measurement region to the reference image displayed on the touch panel. That is, the display operation unit 201 performs the processing of receiving the setting of the measurement region to the reference image obtained by imaging the target. The display operation unit 201 receives the character format of the character string of the recognition target included in the measurement region (Step S104). That is, the display operation unit 201 performs the processing of receiving the character format indicating the restricting condition of each character of the recognition target. The input character format is transmitted to the vision sensor 200.

The vision sensor 200 performs the automatic teaching processing (Step S110). The automatic teaching processing will be described in detail with reference to Fig. 5.

In the automatic teaching processing in Fig. 5, the measurement parameter having a high potential to change the value thereof is fixed in the descending order. This is because an improper combination of the measurement parameters is possibly determined when all the measurement parameters are simultaneously changed. In the example in Fig. 5, the measurement parameters are determined in the order of (1) character color and printing type, (2) character thickness threshold and filter size, (3) dot distance (vertical) and dot distance (horizontal), and (4) rotation variation correction and oblique type variation correction. Actually, because frequently the character thickness threshold and the filter size are simultaneously changed, the character thickness threshold and the filter size are simultaneously determined in the same processing. At the beginning of the automatic teaching processing, all the measurement parameters are set to default values.

In the automatic teaching processing in Fig. 5, whether a result of the character recognition in accordance with the character format exceeds a predetermined probability is determined based on whether the character recognition result (the read result) is matched with the set character format. That is, when the result of the character recognition performed without character format condition is matched with the set character format, it is said that the measurement parameter has a high degree of reliability at that time. By checking whether the character recognition result (the read result) is matched with the set character format, the measurement parameter can be determined such that the region is extracted along the originally-intended character format. In the case that the specific character is designated in the character format, whether the character is matched with the designated specific character is determined.

More specifically, referring to Fig. 5, the vision sensor 200 changes a value of a set of the character color and the printing type (Step S1101), and the vision sensor 200 performs the character recognition to the partial image included in the measurement region of the reference image in accordance with the changed measurement parameter (Step S1102). The vision sensor 200 determines whether the character format acquired from the character recognition result (the read result) is matched with the set character format (Step S1103). When the character format acquired from the character recognition result (the read result) is matched with the set character format (YES in Step S1103), the vision sensor 200 reflects the current measurement parameter as the setting value (Step S1104). The processing in Step S114 of Fig. 4 is performed.

When the character format acquired from the character recognition result (the read result) is not matched with the set character format (NO in Step S1103), the vision sensor 200 changes the value of the set of the character thickness threshold and the filter size (Step S1105), and the vision sensor 200 performs the character recognition to the partial image included in the measurement region of the reference image in accordance with the changed measurement parameter (Step S1106). The vision sensor 200 determines whether the character format acquired from the character recognition result (the read result) is matched with the set character format (Step S1107). When the character format acquired from the character recognition result (the read result) is matched with the set character format (YES in Step S1107), the vision sensor 200 reflects the current measurement parameter as the setting value (Step S1104). The processing in Step S114 of Fig. 4 is performed.

When the character format acquired from the character recognition result (the read result) is not matched with the set character format (NO in Step S1107), the vision sensor 200 changes the value of the set of the dot distance (vertical) and the dot distance (horizontal) (Step S1108), and the vision sensor 200 performs the character recognition to the partial image included in the measurement region of the reference image in accordance with the changed measurement parameter (Step S1109). The vision sensor 200 determines whether the character format acquired from the character recognition result (the read result) is matched with the set character format (Step S1110). When the character format acquired from the character recognition result (the read result) is matched with the set character format (YES in Step S1110), the vision sensor 200 reflects the current measurement parameter as the setting value (Step S1104). The processing in Step S114 of Fig. 4 is performed.

However, the dot distance (vertical) and the dot distance (horizontal) are the effective parameters only in the case that the printing type is the "dot", and the pieces of processing in Steps S1108 to S1110 may be skipped in the case that the value of the printing type is the "seal".

When the character format acquired from the character recognition result (the read result) is not matched with the set character format (NO in Step S1110), the vision sensor 200 changes the value of the set of the rotation variation correction and the oblique type variation correction (Step S1111), and the vision sensor 200 performs the character recognition to the partial image included in the measurement region of the reference image in accordance with the changed measurement parameter (Step S1112). The vision sensor 200 determines whether the character format acquired from the character recognition result (the read result) is matched with the set character format (Step S1113). When the character format acquired from the character recognition result (the read result) is matched with the set character format (YES in Step S1113), the vision sensor 200 reflects the current measurement parameter as the setting value (Step S1104). The processing in Step S114 of Fig. 4 is performed.

The rotation variation correction and the oblique type variation correction are performed just to be sure, and the measurement parameters of the rotation variation correction and the oblique type variation correction may be excluded from the automatic teaching processing.

When the character format acquired from the character recognition result (the read result) is not matched with the set character format (NO in Step S1113), the pieces of processing from Step S1101 are performed again after the measurement parameters are returned to the original values (Step S1114).

Thus, based on the result of the character recognition, the vision sensor 200 changes the parameters such that the result of the character recognition in accordance with the character format exceeds the predetermined probability, and the vision sensor 200 determines the initial values of the parameters relating to the character recognition. In other words, the vision sensor 200 changes the parameters such that the result of the character recognition fits into the predetermined character format, and the vision sensor 200 determines the initial values of the parameters relating to the character recognition.

Referring to Fig. 4 again, the vision sensor 200 outputs the current measurement parameter as the initial value of the measurement parameter set by the automatic teaching function (Step S114). Then, the measurement parameter changing processing is performed in response to a user's request. Specifically, the display operation unit 201 determines whether the user makes a request to change the measurement parameter (Step S120). Typically, the display operation unit 201 determines whether an object (button) indicating the change of the measurement parameter is selected on the touch panel. Unless the user makes the request to change the measurement parameter (NO in Step S120), the pieces of processing from Step S130 are performed.

When the user makes the request to change the measurement parameter (YES in Step S120), the display operation unit 201 displays the current value of the measurement parameter, and receives the instruction to change the measurement parameter (Step S122). That is, the display operation unit 201 performs the processing of externally receiving the change of the initial value of the parameter relating to the character recognition. The instruction to the display operation unit 201 to change the designated measurement parameter is transmitted to the vision sensor 200 to change the measurement parameter retained by the vision sensor 200. The vision sensor 200 performs the character recognition to the partial image included in the measurement region again in accordance with the changed measurement parameter and the set character format (Step S124). That is, the vision sensor 200 performs the character recognition to the partial image included in the measurement region again in accordance with the parameter relating to the changed character recognition. The result of the character recognition performed again is displayed on the display operation unit 201.

Then the display operation unit 201 determines whether the instruction to start the operating mode is issued (Step S130). Unless the instruction to start the operating mode is issued (NO in Step S130), the processing in Step S140 is performed.

When the instruction to start the operating mode is issued (YES in Step S130), the vision sensor 200 images the target to acquire the input image in accordance with a predetermined trigger condition (Step S132), and the vision sensor 200 performs the character recognition to the region included in the input image in accordance with the current measurement parameter and the character format (Step S134). The vision sensor 200 outputs the result of the character recognition to the display operation unit 201 (Step S136).

That is, when the instruction to start the operating mode is issued, the display operation unit 201 transmits the measurement parameter set at that time and the character format to the vision sensor 200. The vision sensor 200 performs the processing of acquiring the input image of the processing target, and performs the recognition processing to the acquired input image. In the recognition processing, the vision sensor 200 specifies the region having the relatively high degree of coincidence under the set character format.

In other words, the character recognition in accordance with the character format is performed to at least one character region extracted from the input image, thereby extracting the character region having the degree of coincidence higher than the predetermined value. Therefore, sometimes the plural character regions, namely, the plural pieces of character information are extracted from one input image. The image processing system 1 may prohibit or permit the extraction of the plural pieces of character information depending on a provided application.

The display operation unit 201 determines whether the instruction to stop the operating mode is issued (Step S140). Unless the instruction to stop the operating mode is issued (NO in Step S140), the pieces of processing from Step S132 are performed. When the instruction to stop the operating mode is issued (YES in Step S140), the display operation unit 201 makes a transition to the adjustment mode to display an initial menu screen (Step S142), and the display operation unit 201 determines whether the instruction to start the automatic teaching function is issued (Step S144). Unless the instruction to start the automatic teaching function is issued (NO in Step S144), the pieces of processing from Step S142 are performed.

When the instruction to start the automatic teaching function is issued (YES in Step S144), the pieces of processing from Step S100 are performed.

### (F. User interface screen)

An example of the user interface screen provided in each situation of the processing procedure in Fig. 4 above described will be described below.

### (f1. Initial menu screen)

Fig. 6 is a view illustrating an example of a user interface screen 400A, which is provided by the image processing system 1 of the embodiment and illustrates an initial menu of the character recognition processing. The display operation unit 201 provides the user interface screen 400A in Fig. 6. The display operation unit 201 also provides the following user interface screens.

Referring to Fig. 6, on the user interface screen 400A, various settings are displayed in a flow format in order to perform the character recognition. Specifically, the objects indicating three pieces of processing, namely, "TEACHING" indicating the teaching processing, "DETERMINATION CONDITION" indicating the processing of setting various parameters relating to the character recognition, and "MATCHING CONDITION" indicating the processing of setting various parameters such as the OK/NG determination in which the character recognition result is used are displayed on the user interface screen 400A. The automatic teaching function is started when the user selects an object 402 of "TEACHING".

### (f2. Setting of measurement region)

Fig. 7 is a view illustrating an example of a user interface screen 400B, which is provided by the image processing system 1 and used to set the measurement region in the character recognition processing. Referring to Fig. 7, a reference image 404 acquired by imaging the target (the reference sample) is displayed on the user interface screen 400B. The user sets the objective measurement region from above the displayed reference image 404. Specifically, the user operates a cursor 406 by a touch operation or a mouse operation to set the region corresponding to the measurement region. In Fig. 7, a range surrounded by the four cursors 406 constitutes a measurement region 408.

The display operation unit 201 displays the reference image 404, and determines the measurement region 408 in response to the user's operation performed to the displayed reference image 404. When an object "OK" is selected on the user interface screen 400B, the user interface screen 400B makes the transition to a character format setting screen with respect to the character string of the recognition target included in the measurement region 408.

### (f3. Setting of character format)

Fig. 8 is a view illustrating an example of a user interface screen 400C, which is provided by the image processing system 1 and used to set the character format in the character recognition processing. In the image processing system 1, plural measurement regions can be set to the same input image. The character format can be set to each of the four measurement regions in the user interface screen 400C in Fig. 8. That is, the user interface screen 400C includes four character format input regions 410, 412, 414, and 416.

Alternatively, the single measurement region may be set such that the plural character strings (lines) are included, and the character string format may be set to each character string included in the measurement region. For example, in the case that the single measurement region includes the two character strings, the respective character string formats may be set using the two character format input regions 410 and 412, or the respective character string formats may be set in the one character format input region 410 while divided using a predetermined delimiter (for example, a line feed code).

The user selects one of the character format input regions to input the objective character format. At this point, the character format may directly be input with an input device such as a keyboard, or the following user interface screen may be provided in order to input the character format.

Figs. 9 and 10 are views illustrating examples of user interface screens, which are provided by an image processing system 1 in accordance with a modification of the embodiment and used to set the character format. The user interface screen in Fig. 9 or 10 is displayed by selecting one of the character format input regions 410, 412, 414, and 416 on the user interface screen 400C in Fig. 8.

In a user interface screen 400D in Fig. 9, the character format input region 410 indicating the currently-input character format, plural objects 420 correlated with plural character classes that can be designated, respectively, and plural objects 430 correlated with the specific character that can be designated are displayed side by side, that is, in the same screen. The character format corresponding to the selected object is added when the user selects one of the objects 420 and 430. That is, when one of the objects is selected, the display operation unit 201 adds the character class or the specific character, which are correlated with the selected object, to the character format.

The display operation unit 201 displays the set character format, displays the plural objects correlated with plural character classes that can be designated, and adds the character class correlated with the selected object to the character format in response to the selection of any one of the objects.

The plural objects 420 include the object designating "ALPHANUMERIC CHARACTER", the object designating "NUMERICAL CHARACTER", the object designating "ALPHABETICAL CHARACTER", the object designating "SYMBOLIC CHARACTER", and the object designating "SKIP".

In the display region 402, the set character format is displayed using the symbol correlated with each character class. That is, the character format is defined by the symbols "#", "$", and "@". In order to understand the meaning of the symbol at first glance, a message (displays such as "ALPHANUMERIC CHARACTER" and "NUMERICAL CHARACTER") indicating the correlated character class and the symbol (such as "?" and "#") corresponding to the character class are displayed in each of the objects 420 on the user interface screen 400D in Fig. 9.

The message is added to the object 420 such that the meaning of the correlated character class can be understood at first glance, and the symbol indicating the corresponding character class is also added to the object 420, so that the user can easily understand the content of the currently-set character format displayed in the character format input region 410 even if the user does not previously learn the meaning of each symbol.

The object that edits the currently-set character format is also displayed on the user interface screen 400D. For example, an object 424 correlated with a backspace operation (an operation to delete the immediately preceding character of the cursor), an object 426 correlated with a clear operation (an operation to wholly delete the currently-set character format), and an object 428 correlated with an operation to move the cursor are disposed on the user interface screen 400D.

The user selects the object 430 in the case that it is necessary to individually designate the specific character. Therefore, the user interface screen 400D in Fig. 9 makes the transition to a user interface screen 400E in Fig. 10.

Referring to Fig. 10, in the user interface screen 400E, an object 432 is disposed instead of the objects 420 and 430 compared with the user interface screen 400D. In the object 432, the specific characters that can be designated are disposed by a predetermined rule. In the example in Fig. 10, the numerical characters and the alphabet are arrayed in a QWERT format. There is no particular limitation to the array of the specific characters, but the specific characters may be arrayed in the alphabetic order or another array order. The user can set the desired specific character as the character format using the user interface screen 400E.

The use of the user interface screens in Figs. 9 and 10 can enable the user to easily designate the character class as the character format even if the user has a poor knowledge about the character format.

Then the automatic teaching function is started when the object "OK" is selected on the user interface screen 400D or 400E.

### (f4. Automatic teaching function)

Fig. 11 is a view illustrating an example of a user interface screen 400F, which is provided by the image processing system 1 and relates to the automatic teaching function in the character recognition processing. Referring to Fig. 11, the reference image 404 and the measurement region 408 set on the reference image 404 are displayed on the user interface screen 400F, and the automatic teaching function is started when the user selects an object 436 "TEACH". Specifically, in accordance with the set character format, the vision sensor 200 performs the character recognition to the partial image included in the measurement region, and optimizes the measurement parameter. That is, the measurement parameter is adjusted during the performance of the automatic teaching function such that the character recognition result based on the set character format is optimized.

Then a menu screen is displayed in order to perform manual adjustment when the user selects an object 438 in order to display a menu.

Fig. 12 is a view illustrating an example of a user interface screen 400G, which is provided by the image processing system 1 and relates to a manual adjustment in the character recognition processing. As illustrated in Fig. 12, when the object 438 is selected, a list of various menu items is displayed. An object 440 (MEASUREMENT REGION EDITING) used to change the currently-set measurement region, an object 442 (CHARACTER FORMAT) used to change the currently-set character format, an object 444 (CAMERA ADJUSTMENT) used to change an imaging condition, an object 446 (MEASUREMENT PARAMETER) used to change the measurement parameter, and an object 448 (CONTINUOUS MEASUREMENT TEST) used to test the processing in the operation mode are displayed on the user interface screen 400G.

### (f5. Change of character format)

When the object 442 (CHARACTER FORMAT) that changes the currently-set character format is selected on the user interface screen 400G in Fig. 12, a user interface screen is provided in order to change (adjust) the currently-set character format.

Fig. 13 is a view illustrating an example of a user interface screen 400H, which is provided by the image processing system 1 and relates to a character format adjustment in the character recognition processing. Referring to Fig. 13, on the user interface screen 400H, the currently-set character formats are displayed in the four character format input regions 410, 412, 414, and 416. Additionally, character recognition results 411, 413, 415, and 417 that are extracted by the automatic teaching function are displayed while correlated with the respective character format input regions 410, 412, 414, and 416. The user refers to the character recognition results 411, 413, 415, and 417 to determine whether the set character format is correct, and to determine whether the character recognition is correctly performed in accordance with the set character format.

### (f6. Change of measurement parameter)

When the object 446 (MEASUREMENT PARAMETER) that changes the measurement parameter is selected on the user interface screen 400G in Fig. 12, a user interface screen is provided in order to check and change (adjust) the currently-set measurement parameter.

Fig. 14 is a view illustrating an example of a user interface screen 400I, which is provided by the image processing system 1 and relates to a measurement parameter adjustment in the character recognition processing. Referring to Fig. 14, a list of the measurement parameter items and the currently-set values is displayed on the user interface screen 400I. Specifically, a field 450 indicating the character color, a field 452 indicating the printing type, a field 454 indicating the dot distance (vertical), a field 456 indicating the dot distance (vertical), a field 458 indicating the character thickness threshold, and a field 460 indicating the noise filter size are displayed as the measurement parameters.

The user refers to the user interface screen 400I to check the states of the measurement parameters that are determined as a result of the automatic teaching function. The user can change or adjust the currently-set value by selecting each field.

### (f6a. Character color)

When the field 450 indicating the character color is selected on the user interface screen 400I in Fig. 14, a user interface screen is provided in order to check and change (adjust) the setting value of the set character color.

Fig. 15 is a view illustrating an example of a user interface screen 400J, which is provided by the image processing system 1 and relates to a character color adjustment of the measurement parameter in the character recognition processing. Because one of "BLACK CHARACTER" and "WHITE CHARACTER" is selectively set as the setting value of the character color, an object 462 corresponding to "BLACK CHARACTER" and an object 464 corresponding to "white character" are displayed on the user interface screen 400J in Fig. 14 in a selectable manner. A display mode of the object 462 of "BLACK CHARACTER" differs from that of the object 464 of "WHITE CHARACTER" such that the currently setting value is understood.

### (f6b. Dot distance)

When the field 454 indicating the dot distance (vertical) is selected on the user interface screen 400I in Fig. 14, a user interface screen is provided in order to check and change (adjust) the setting value of the set dot distance (vertical).

Fig. 16 is a view illustrating an example of a user interface screen 400K, which is provided by the image processing system 1 and relates to a dot distance (vertical) adjustment of the measurement parameter.

The setting value of the current dot distance (vertical) and the result of the character recognition performed in accordance with the setting value are previewed on the user interface screen 400K in Fig. 16. Specifically, the character region extracted from the measurement region 408 set on the reference image is indicated by a frame, and each frame is displayed such that the character class of the character in the frame is indicated. The user checks the display in Fig. 16 to determine whether the character region is correctly extracted.

An object 466 that adjusts the dot distance (vertical) is displayed on the user interface screen 400K, and the user can adjust the setting value of the dot distance (vertical) by operating the object 466. At this point, the character recognition is performed again to the partial image in accordance with the changed measurement parameter such that the adjustment result of the dot distance (vertical) is immediately understood. Therefore, the user can easily set (what is called tuning work) the measurement parameters such as the dot distance (vertical) to the optimum values.

### (f6c. Threshold)

When the field 458 indicating the character thickness threshold is selected on the user interface screen 400I in Fig. 14, a user interface screen is provided in order to check and change (adjust) the setting value of the set character thickness threshold.

Figs. 17 and 18 are views illustrating an example of a user interface screen 400L, which is provided by the image processing system 1 and relates to a character thickness threshold adjustment of the measurement parameter.

The setting value of the current character thickness threshold and the result of the character recognition performed in accordance with the setting value are previewed on the user interface screen 400L in Figs. 17 and 18. Specifically, the character region extracted from the measurement region 408 set on the reference image is indicated by a frame, and each frame is displayed such that the character class of the character in the frame is indicated. The user checks the display to determine whether the character region is correctly extracted.

An object 474 that adjusts the character thickness threshold is displayed on the user interface screen 400L, and the user can adjust the setting value of the character thickness threshold by operating the object 474. At this point, the character recognition is performed again to the partial image in accordance with the changed measurement parameter such that the adjustment result of the character thickness threshold is immediately understood.

Specifically, the character thickness threshold is set to 0 on the user interface screen 400L in Fig. 17, and the character thickness threshold is set to 18 on the user interface screen 400L in Fig. 18. From the comparison of the character thickness thresholds in Figs. 17 and 18, it is found that the range extracted as the character region changes with increasing character thickness threshold. Therefore, the user can easily set (what is called the tuning work) the measurement parameters such as the character thickness threshold to the optimum values.

### (G. Advantage)

According to the embodiment, the character format including the character class and the specific character is input to perform the automatic teaching function, thereby automatically adjusting the measurement parameters necessary for the character recognition processing. Therefore, even if the user has the poor knowledge about the image processing such as the character recognition, the user can easily set the measurement parameters necessary for the character recognition.

According to the embodiment, the character format is used instead of previously preparing the many OK images and NG images, so that the measurement parameters can be set and optimized by the smaller number of calculation times.

The embodiment is disclosed by way of example in every way, but the embodiment is not restrictive. The scope of the present invention is indicated not by the above description but by claims of the present invention, and the equivalent meaning of the claims and all the changes within the claims are also included in the scope of the present invention.

### INDEX TO THE REFERENCE NUMERALS

2 ... workpiece; 200 ... vision sensor; 201 ... display operation unit; 202 ... transmission cable; 203 ... IO cable; 204 ... touch panel; 211 ... lighting part; 212 ... imaging part; 213 ... processor; 214 ... attaching part; 221 ... imaging lens; 222 ... imaging element; 223 ... control system; 224 ... lighting lens; 226 ... CPU; 227 ... indicating lens controller; 228, 240 ... power supply; 229 ... communication system; 230 ... input/output system; 231 ... memory; 241 ... detector; 242 ... display; 243 ... display driver; 244 ... display controller; 245 ... image storage; 246 ... image controller; 247 ... transmitter; 250 ... PLC; 300 ... character format; 310 ... input image; 312 ... character region; 320 ... processing result; 330 ... character recognition database; 340 ... measurement parameter.

## Claims

1. An image processing system (1) for acquiring character information from an input image (310) including a character string, the image processing system (1) comprising:
a display operation unit (201) implemented to display a reference image (404) acquired by imaging a target including a character string on a user interface;
a part implemented to receive, from a user, a setting of a measurement region (408) on the displayed reference image (404);
a part implemented to receive a character format (300), set by the user using the user interface, indicating a restricting condition of each character in the character string;
a recognition part implemented to perform a character recognition to a partial image included in the measurement region (408) in accordance with the set character format (300) and in accordance with a previously-set measurement parameter of the character recognition, wherein the previously-set measurement parameter is set by a user;
a change part implemented to change the previously-set measurement parameter during an adjustment mode of the character recognition into an initial parameter such that the result of the character recognition corresponds to the set character format (300) with a probability exceeding a predetermined probability, wherein the adjustment mode is a mode in which the measurement parameter relating to a character recognition processing is adjusted;
an acquisition part implemented to acquire the input image by imaging a target in an operating mode; and
a part implemented to perform a character recognition on the input image in accordance with the adjusted measurement parameter and the character format (300).

2. The image processing system according to claim 1, wherein
the set character format (300) includes a character class or a specific character, the set character (300) format being designated in each character.

3. The image processing system according to claim 1 or 2, wherein
the part implemented to receive a setting of a measurement region (408) is further implemented to display the reference image (404), and to determine the measurement region (408) in response to a user's operation performed to the displayed reference image (404).

4. The image processing system according to any one of claims 1 to 3, wherein
the part implemented to receive a set character format (300) is further implemented to display the set character format (300) and a plurality of objects correlated with a plurality of character classes, and to add the character class to the set character format by selecting an object correlated with the character class.

5. The image processing system according to any one of claims 1 to 4, wherein
the change part is implemented to receive an instruction to change the initial value of the parameter of the character recognition for the operating mode from an external device other than a vision sensor.

6. The image processing system according to claim 5, wherein
the recognition part is implemented to perform the character recognition to the partial image again in accordance with the initial parameter relating to the changed character recognition.

7. The image processing system according to any one of claims 1 to 6, wherein
the recognition part is implemented to perform the recognition processing to the acquired input image and to specify a region (312) having a predetermined high degree of coincidence under the set character format (300).

8. An image processing method for acquiring character information from an input image (310) including a character string, the method comprising the steps of:
displaying a reference image (404) acquired by imaging a target including a character string on a user interface;
receiving, from a user, a setting of a measurement region (408) on the displayed reference image (404);
receiving a character format (300), set by the user using the user interface, indicating a restricting condition of each character in the character string;
performing a character recognition to a partial image included in the measurement region (408) in accordance with the set character format (300) and in accordance with a previously-set measurement parameter of the character recognition, wherein the previously-set measurement parameter is set by a user; and
changing the previously-set measurement parameter during an adjustment mode of the character recognition into an initial parameter such that the result of the character recognition corresponds to the set character format (300) with a probability exceeding a predetermined probability,
wherein the adjustment mode is a mode in which the measurement parameter relating to a character recognition processing is adjusted,
acquiring the input image by imaging a target, and
performing a character recognition on the input image in accordance with the adjusted measurement parameter and the character format (300).

## Patentansprüche

1. Bildverarbeitungssystem (1) zum Erfassen von Zeicheninformation aus einem Eingabebild (310), das eine Zeichenkette enthält, wobei das Bildverarbeitungssystem (1) umfasst:
eine Anzeigebetriebseinheit (201), die geeignet ist, ein Referenzbild (404) anzuzeigen, das durch Abbilden eines eine Zeichenkette enthaltenden Ziels, das eine Zeichenkette enthält, auf einer Benutzerschnittstelle erfasst wird;
ein Teil, das geeignet ist, von einem Benutzer eine Einstellung eines Messbereichs (408) auf dem angezeigten Referenzbild (404) zu empfangen;
ein Teil, das geeignet ist, ein Zeichenformat (300) zu empfangen, das von dem Benutzer unter Verwendung der Benutzerschnittstelle festgelegt ist und eine einschränkende Bedingung für jedes Zeichen in der Zeichenkette angibt;
ein Erkennungsteil, das geeignet ist, eine Zeichenerkennung an einem Teilbild, das in dem Messbereich (408) enthalten ist, in Übereinstimmung mit dem festgelegten Zeichenformat (300) und in Übereinstimmung mit einem vorher festgelegten Messparameter der Zeichenerkennung durchzuführen, wobei der vorher festgelegte Messparameter von einem Benutzer festgelegt ist;
ein Änderungsteil, das geeignet ist, den vorher festgelegten Messparameter während eines Einstellmodus der Zeichenerkennung in einen Ursprungsparameter zu ändern, sodass das Ergebnis der Zeichenerkennung dem festgelegten Zeichenformat (300) mit einer Wahrscheinlichkeit entspricht, die eine vorbestimmte Wahrscheinlichkeit übersteigt, wobei der Einstellmodus ein Modus ist, in dem der Messparameter, der sich auf eine Zeichenerkennungsverarbeitung bezieht, festgelegt wird;
ein Erfassungsteil, das geeignet ist, das Eingabebild durch Abbilden eines Ziels in einem Betriebsmodus zu erfassen; und
ein Teil, das geeignet ist, eine Zeichenerkennung auf dem Eingabebild in Übereinstimmung mit dem festgelegten Messparameter und dem Zeichenformat durchzuführen (300).

2. Bildverarbeitungssystem nach Anspruch 1, wobei
das festgelegte Zeichenformat (300) eine Zeichenklasse oder ein bestimmtes Zeichen enthält, wobei das festgelegte Zeichenformat (300) in jedem Zeichen bezeichnet ist.

3. Bildverarbeitungssystem nach Anspruch 1 oder 2, wobei
das Teil, das geeignet ist, eine Einstellung eines Messbereichs (408) zu empfangen, ferner geeignet ist, das Referenzbild (404) anzuzeigen und den Messbereich (408) als Reaktion auf eine Benutzeroperation zu bestimmen, die an dem angezeigten Referenzbild (404) durchgeführt wurde.

4. Bildverarbeitungssystem nach einem der Ansprüche 1 bis 3, wobei
das Teil, das geeignet ist, ein festgelegtes Zeichenformat (300) zu empfangen, ferner geeignet ist, das festgelegte Zeichenformat (300) und mehrere Objekte, die mit mehreren Zeichenklassen korreliert sind, anzuzeigen, und dem festgelegten Zeichenformat die Zeichenklassen hinzuzufügen, indem ein Objekt ausgewählt wird, das mit der Zeichenklasse korreliert ist.

5. Bildverarbeitungssystem nach einem der Ansprüche 1 bis 4, wobei
das Änderungsteil geeignet ist, eine Anweisung zur Änderung des Ursprungswertes des Parameters der Zeichenerkennung für die Betriebsart von einem externen Gerät, das kein Vision-Sensor ist, zu erhalten.

6. Bildverarbeitungssystem nach Anspruch 5, wobei
das Erkennungsteil geeignet ist, die Zeichenerkennung für das Teilbild wieder in Übereinstimmung mit dem Ursprungsparameter bezüglich der geänderten Zeichenerkennung durchzuführen.

7. Bildverarbeitungssystem nach einem der Ansprüche 1 bis 6, wobei
das Erkennungsteil geeignet ist, die Erkennungsverarbeitung an dem erfassten Eingabebild durchzuführen und einen Bereich (312) mit einem vorbestimmten hohen Grad an Übereinstimmung unter dem eingestellten Zeichenformat (300) zu spezifizieren.

8. Bildverarbeitungsverfahren zum Erfassen von Zeicheninformation aus einem Eingabebild (310), das eine Zeichenkette enthält, wobei das Verfahren die folgenden Schritte umfasst:
Anzeigen eines Referenzbildes (404), das durch Abbilden eines eine Zeichenkette enthaltenden Ziels, auf einer Benutzerschnittstelle erfasst wurde;
Empfangen, von einem Benutzer, einer Einstellung eines Messbereichs (408) auf dem angezeigten Referenzbild (404);
Empfangen eines Zeichenformats (300), das von dem Benutzer unter Verwendung der Benutzerschnittstelle festgelegt wird und eine einschränkende Bedingung für jedes Zeichens in der Zeichenkette anzeigt;
Durchführen einer Zeichenerkennung an einem Teilbild, das in dem Messbereich (408) enthalten ist, in Übereinstimmung mit dem festgelegten Zeichenformat (300) und in Übereinstimmung mit einem vorher festgelegten Messparameter der Zeichenerkennung, wobei der vorher festgelegte Messparameter durch einen Benutzer festgelegt wird; und
Ändern des zuvor festgelegten Messparameters während eines Einstellmodus der Zeichenerkennung in einen Ursprungsparameter, sodass das Ergebnis der Zeichenerkennung dem festgelegten Zeichenformat (300) mit einer Wahrscheinlichkeit entspricht, die eine vorgegebene Wahrscheinlichkeit übersteigt,
wobei der Einstellmodus ein Modus ist, in dem der Messparameter, der sich auf eine Zeichenerkennungsverarbeitung bezieht, festgelegt wird,
Erfassen des Eingabebildes durch Abbilden eines Ziels; und
Durchführen einer Zeichenerkennung an dem Eingabebild in Übereinstimmung mit den eingestellten Messparametern und dem Zeichenformat (300).

## Revendications

1. Système de traitement d'images (1) pour acquérir des informations de caractères à partir d'une image d'entrée (310) comprenant une chaîne de caractères, le système de traitement d'images (1) comprenant :
une unité d'opération d'affichage (201) configurée pour afficher une image de référence (404) acquise par l'imagerie d'une cible comprenant une chaîne de caractères sur une interface utilisateur ;
une partie configurée pour recevoir, de la part d'un utilisateur, un réglage d'une région de mesure (408) sur l'image de référence (404) affichée ;
une partie configurée pour recevoir un format de caractère (300), défini par l'utilisateur à l'aide de l'interface utilisateur, indiquant une condition de restriction de chaque caractère de la chaîne de caractères ;
une partie de reconnaissance configurée pour effectuer une reconnaissance de caractères sur une image partielle incluse dans la région de mesure (408) conformément au format de caractère défini (300) et conformément à un paramètre de mesure de la reconnaissance de caractères défini au préalable, dans laquelle le paramètre de mesure défini au préalable est défini par un utilisateur ;
une partie de modification configurée pour modifier le paramètre de mesure défini au préalable pendant un mode d'ajustement de la reconnaissance de caractères en un paramètre initial de telle sorte que le résultat de la reconnaissance de caractères corresponde au format de caractère défini (300) avec une probabilité dépassant une probabilité prédéterminée, dans lequel le mode d'ajustement est un mode dans lequel le paramètre de mesure relatif à un traitement de reconnaissance de caractères est ajusté ;
une partie d'acquisition configurée pour acquérir l'image d'entrée en imaginant une cible dans un mode de fonctionnement ; et
une partie configurée pour effectuer une reconnaissance de caractères sur l'image d'entrée conformément au paramètre de mesure ajusté et au format de caractère (300).

2. Système de traitement d'images selon la revendication 1, dans lequel
le format de caractère défini (300) comprend une classe de caractères ou un caractère spécifique, le format de caractère défini (300) étant désigné dans chaque caractère.

3. Système de traitement d'images selon la revendication 1 ou 2, dans lequel
la partie configurée pour recevoir un réglage d'une région de mesure (408) est en outre configurée pour afficher l'image de référence (404), et pour déterminer la région de mesure (408) en réponse à une opération effectuée par un utilisateur sur l'image de référence affichée (404).

4. Système de traitement d'images selon l'une quelconque des revendications 1 à 3, dans lequel
la partie configurée pour recevoir un format de caractère défini (300) est en outre configurée pour afficher le format de caractère défini (300) et une pluralité d'objets corrélés avec une pluralité de classes de caractères, et pour ajouter la classe de caractères au format de caractère défini en sélectionnant un objet corrélé avec la classe de caractères.

5. Système de traitement d'images selon l'une quelconque des revendications 1 à 4, dans lequel
la partie de modification est configurée pour recevoir une instruction de modification de la valeur initiale du paramètre de reconnaissance de caractères pour le mode de fonctionnement à partir d'un dispositif externe autre qu'un capteur de vision.

6. Système de traitement d'images selon la revendication 5, dans lequel
la partie de reconnaissance est configurée pour effectuer de nouveau la reconnaissance de caractères sur l'image partielle conformément au paramètre initial relatif à la reconnaissance de caractères modifiée.

7. Système de traitement d'image selon l'une quelconque des revendications 1 à 6, dans lequel
la partie de reconnaissance est configurée pour effectuer le traitement de reconnaissance de l'image d'entrée acquise et pour spécifier une région (312) ayant un degré de coïncidence élevé prédéterminé sous le format de caractère défini (300).

8. Procédé de traitement d'image pour acquérir des informations de caractères à partir d'une image d'entrée (310) comprenant une chaîne de caractères, le procédé comprenant les étapes suivantes :
l'affichage d'une image de référence (404) acquise par imagerie d'une cible comprenant une chaîne de caractères sur une interface utilisateur ;
la réception, de la part d'un utilisateur, d'un réglage d'une région de mesure (408) sur l'image de référence affichée (404) ;
la réception d'un format de caractère (300), défini par l'utilisateur à l'aide de l'interface utilisateur, indiquant une condition de restriction de chaque caractère de la chaîne de caractères ;
l'effectuation d'une reconnaissance de caractères sur une image partielle incluse dans la région de mesure (408) conformément au format de caractère défini (300) et conformément à un paramètre de mesure de la reconnaissance de caractères défini au préalable, dans lequel le paramètre de mesure défini au préalable est défini par un utilisateur ; et
la modification du paramètre de mesure défini au préalable pendant un mode d'ajustement de la reconnaissance de caractères en un paramètre initial de telle sorte que le résultat de la reconnaissance de caractères corresponde au format de caractère défini (300) avec une probabilité dépassant une probabilité prédéterminée,
dans lequel le mode d'ajustement est un mode dans lequel le paramètre de mesure relatif à un traitement de reconnaissance de caractères est ajusté,
l'acquisition de l'image d'entrée en imageant une cible, et
l'effectuation d'une reconnaissance de caractères sur l'image d'entrée conformément au paramètre de mesure ajusté et au format de caractère (300).
